Europäisches Patentamt

European Patent Office

Office européen des brevets

(19)

(11) Numéro de publication : **0 019 678**
**B1**

(12) # FASCICULE DE BREVET EUROPÉEN

(45) Date de publication du fascicule du brevet :
04.07.84

(21) Numéro de dépôt : 79400765.8

(22) Date de dépôt : 19.10.79

(51) Int. Cl.³ : **B 01 J 39/04, C 25 D 21/22,**
**C 23 G 1/36, C 02 F 1/42**

(54) **Procédé de traitement des eaux provenant du rinçage de pièces métalliques ayant subi un décapage au moyen d'un acide fort.**

(30) Priorité : 09.05.79 FR 7911687

(43) Date de publication de la demande :
10.12.80 Bulletin 80/25

(45) Mention de la délivrance du brevet :
04.07.84 Bulletin 84/27

(84) Etats contractants désignés :
**AT BE CH DE FR GB IT LU NL SE**

(56) Documents cités :
**DE-A- 2 758 960**
**US-A- 3 380 804**
**US-A- 3 658 470**
**US-A- 3 847 757**
**US-A- 4 012 318**
**CHEMICAL ABSTRACTS, vol. 84, 26 janvier 1976, no.**
**4 ref. 21759d, page 310 Columbus Ohio US**
**CHEMICAL ABSTRACTS, vol. 84, 26 janvier 1976, no.**
**4, ref. 21837c page 317 Columbus, Ohio, US**

(73) Titulaire : **MINEMET RECHERCHE**
**1, avenue Albert Einstein**
**F-78190 Trappes (FR)**
**PROSERPOL**
**5, allée du Bourbonnais**
**F-78310 Maurepas (FR)**

(72) Inventeur : **Bozec, Christian**
**4, rue de Flandre**
**F-78310 Maurepas (FR)**
Inventeur : **Laurent, Jean-Paul**
**40, rue de Provence**
**F-78310 Maurepas (FR)**

(74) Mandataire : **Ricalens, François et al**
**1, avenue Albert Einstein**
**F-78190 Trappes (FR)**

EP 0 019 678 B1

Jouve, 18, rue St-Denis, 75001 Paris, France

# 0 019 678

## Description

La présente invention concerne un procédé de Traitement Intégré des Effluents liquides de Décapage désigné procédé T.I.E.D. et a pour objet un procédé de traitement des eaux provenant du rinçage de pièces métalliques ayant subi un décapage par un acide fort.

On sait qu'une pièce métallique, avant tout traitement de surface, est soumise à un décapage le plus souvent au moyen d'acides minéraux forts tels que les acides chlorhydrique et sulfurique. Une fois décapée, la pièce est rincée, le plus souvent en deux temps (pré-rinçage ou rinçage mort et rinçage proprement dit ou rinçage courant), puis soumise au traitement de surface désiré, soit directement, après un traitement intermédiaire à l'aide d'une solution saline appelée flux. Lorsque le traitement de surface est une galvanisation, le flux est essentiellement composé d'une solution de chlorure de zinc et d'ammonium.

Les eaux de décapage sont source d'une pollution importante et leur rejet est soumis à des normes très strictes. C'est pourquoi quelques procédés, notamment électrolytiques, ont été proposés pour traiter les rejets provenant des décapages proprement dits.

On peut citer, parmi les procédés électrolytiques, le procédé qui consiste à électrodialyser la solution d'acide et de sel métallique le plus souvent ferreux, d'une part, pour régénérer l'acide minéral et, d'autre part, pour éliminer l'ion métallique sous forme d'un dépôt électrolytique.

Dans le cas fréquent des rejets de solutions de chlorure ferreux, on a proposé la pyrohydrolyse du chlorure ferreux qui donne, d'une part, un oxyde de fer en général suffisamment pur pour être utilisable dans la fabrication de ferrites, et, d'autre part de l'acide chlorhydrique qui peut être recyclé aisément vers les installations de décapage.

Toutefois, pour bénéficier pleinement des avantages de cette technique, il faut que l'installation de pyrohydrolyse soit d'une taille importante et qu'elle ait à traiter de grandes quantités de chlorure ferreux. Cette contrainte oblige à organiser un système de collecte de ces solutions chlorurées ferreuses et à redistribuer l'acide chlorhydrique produit. Compte tenu de la concentration élevée en chlorure ferreux dans les bains de décapage, la collecte de ce dernier ne pose pas de difficultés. Cependant, il est impossible de réaliser la collecte et le traitement des eaux de rinçage en raison de leur volume important et de leur faible concentration en chlorure de fer.

D'une manière générale, la technique couramment utilisée pour traiter de telles eaux de rinçage consiste à précipiter les sels qu'elles contiennent au moyen d'une base forte telle que les hydroxydes alcalins ou alcalino-terreux. Cette technique, qui donne, d'une part, des hydroxydes difficiles à filtrer et à entreposer et, d'autre part, une solution relativement saline et impropre au rinçage, entraîne une forte consommation d'eau de bonne qualité, ce qui est coûteux tant pour l'industriel que pour la collectivité, et nécessite des installations de précipitation à la fois volumineuses et chères.

Il convient à ce stade de la description de signaler que les unités de décapage et de traitement de surface sont souvent de petite taille et que leur personnel n'a que rarement les compétences requises pour mettre en œuvre des techniques sophistiquées.

Il faut enfin indiquer que le fer contenu dans les eaux de rinçage peut être sous forme ferrique, ce qui pose un problème d'adaptation si l'on désire traiter ces effluents suivant les mêmes techniques que celles utilisées pour le chlorure ferreux.

C'est pourquoi l'un des buts de la présente invention est de fournir un procédé qui permette la régénération des eaux de rinçage.

Un autre but de la présente invention est de fournir un procédé de traitement des eaux de rinçage qui permette de résoudre le problème des rejets sur une grande échelle.

Un autre but de la présente invention est de fournir un procédé du type ci-dessus qui permette le traitement des rejets métalliques dans les installations utilisées pour le traitement des bains de décapage proprement dits.

Un autre but de la présente invention est de fournir un procédé de traitement des eaux de rinçage qui permette de les régénérer.

Selon la présente invention, ces buts et d'autres qui n'apparaîtront par la suite sont atteints au moyen d'un procédé de traitement des eaux provenant du rinçage de pièces métalliques ferreuses, ayant subi un décapage au moyen d'un acide fort, comportant les étapes suivantes :

a) on met en contact ladite eau de rinçage avec une résine cationique ;

b) on élue la résine chargée au moyen d'une solution au moins quatre fois normale de l'acide fort utilisé pour le décapage ;

caractérisé par le fait que ledit acide concentré, utilisé lors de l'étape b) est une solution de décapage usée et contient de 40 à 150 grammes par litre de fer ; le rapport entre la concentration en ions métalliques et celle en acide fort, exprimé en équivalents-grammes, étant au plus d'un tiers.

Lorsque l'acide de décapage utilisé est de l'acide chlorhydrique, on peut utiliser par exemple de l'acide de 10 à 15° Baumé.

En effet, il a pu être montré que les résines échangeuses de cations présentant des groupements acides forts tels que les groupements sulfoniques et notamment celles dont les résines sont formées de polymères ou de copolymères de styrène, telles que celles vendues par la Société BAYER sous les marques déposées Lewatit S 100 WS et S 112 WS, peuvent être éluées à des acidités beaucoup plus importantes que celles qui sont indiquées par les fabricants de ces résines (2N). En outre, l'utilisation d'acides forts dont la normalité est supérieure ou égale à 4N permet d'utiliser des acides déjà souillés par des ions métalliques si le rapport entre la concentration en ions métalliques et celle en acide fort, exprimées en équivalent-grammes, est au plus égal à un tiers, et, de préférence, au plus égal à un cinquième.

Outre le fer, ces impuretés sont en général des cations di- ou trivalents et correspondent aux métaux constitutifs des pièces métalliques ayant subi le décapage. Parmi les métaux couramment rencontrés dans les pièces métalliques et pouvant être traités suivant la présente invention, on peut citer le cuivre, le nickel, le chrome, le cobalt, le zinc et leurs alliages.

Ceci permet d'utiliser comme acide éluant des solutions d'acide ayant déjà été utilisés pour le décapage. On peut également employer, lorsque l'opération de décapage comporte une étape de pré-rinçage courant réalisée au moyen d'un acide fort et décrite ci-après, les solutions issues de cette étape de pré-rinçage.

Il convient de noter dès à présent qu'un tel pré-rinçage courant peut avantageusement remplacer les pré-rinçages usuels appelés couramment rinçages morts.

Le remplacement d'un pré-rinçage mort par un pré-rinçage courant réalisé au moyen d'acide fort utilisé pour le décapage permet en outre d'augmenter la capacité des résines en diminuant de manière très notable l'entraînement de ions métalliques produits par attaque de l'acide fort sur la pièce métallique lors du décapage.

La température d'élution peut être comprise entre 0 et 100 °C. Toutefois, pour des raisons de simplicité, on choisit la température ambiante sauf si l'on désire éviter des problèmes de cristallisation de sels métalliques dans la colonne contenant le lit de résines.

L'éluat des résines échangeuses d'ions obtenu à la fin de l'étape b) peut être avantageusement recyclé vers les bains de décapage. Ceci permet d'éliminer totalement les effluents chargés en sels métalliques provenant des opérations de rinçage courant et de n'avoir à traiter que les effluents du décapage proprement dit et permet de n'avoir qu'un seul procédé de traitement des effluents. Les ions ferriques des éluats sont réduits à l'état ferreux.

Quand on recycle l'éluat des résines cationiques vers les bains de décapage, la concentration de l'acide utilisé pour l'élution est de préférence choisie de manière que l'acidité résiduelle après l'élution soit voisine de celle du bain de décapage dans lequel l'éluat est recyclé.

Lorsque les acides utilisés pour le décapage sont les acides chlorhydrique, phosphorique et sulfurique, la technique selon la présente invention peut être mise en œuvre sans difficulté. Toutefois certains bains de décapage contiennent des acides oxydants dont l'emploi sous forme concentrée risquerait de détruire la résine. Sont couramment utilisés les acides sulfo-chromique (mélange d'acide sulfurique et d'acide chromique), chloro-chromique, sulfo-nitrique ainsi que les eaux régales (mélange d'acide chlorhydrique et d'acide nitrique en diverses proportions). Dans ce cas, la mise en œuvre selon la présente invention serait difficile. C'est pourquoi il est préférable alors d'utiliser pour éluer non pas le mélange de décapage mais celui des acides qui ne présente pas de caractère oxydant fort (l'acide chlorhydrique dans le cas de l'eau régale et de l'acide chloro-chromique, l'acide sulfurique dans le cas de l'acide sulfo-chromique et sulfo-nitrique), le pré-rinçage courant étant alors réalisé en mettant en œuvre le seul acide non oxydant.

Si l'on désire augmenter la concentration en ions métalliques de l'éluat, on peut réaliser l'élution à contre-courant de la fixation des ions contenus dans les eaux de rinçage.

Pour pouvoir réutiliser les eaux de rinçage déjà passées sur résine cationique (étape a), il faut les faire passer sur une résine anionique qui les débarrassera des anions correspondant à l'acide fort de décapage.

Le procédé comporte en outre les étapes suivantes :

c) on fait passer les eaux de rinçage issues de l'étape a) sur une résine échangeuse d'anions ;

d) on recycle l'eau ainsi permutée vers les installations de rinçage.

La régénération de la résine anionique s'effectue en une étape e) à l'aide d'une base soluble forte telle que des hydroxydes alcalins et l'ammoniaque. De préférence, cette régénération est réalisée à contre-courant suivant la technique décrite dans les notices du procédé dit « Lewatit Schwebebett » éditée par la Société dite « Bayer » et plus particulièrement la notice n° FR 147-743/6303, édition du 1/10/73.

La régénération des résines à contre-courant de la purification des eaux de rinçage permet d'atteindre des concentrations très élevées en ion métallique correspondant au métal attaqué lors du décapage et en anion de l'acide minéral fort. Cet effet de concentration dû aux résines peut être très important puisqu'il permet de passer de niveaux de concentration voisins de quelques milligrammes par litre à des niveaux de concentration de plusieurs dizaines de grammes par litre.

Cet effet de concentration facilite la collecte des effluents. En effet le transport d'une quantité donnée d'un sel nécessite beaucoup moins de moyens lorsque ce sel est sous la forme d'une solution à quelques dizaines de grammes par litre que lorsqu'il est sous la forme d'une solution à quelques milligrammes par litre.

Selon une première mise en œuvre de l'invention, on peut utiliser l'hydroxyde d'un métal alcalin tel que l'hydroxyde de sodium, ce qui donnera un sel de sodium dont le rejet est toléré dans certaines limites par l'administration.

Selon une autre mise en œuvre de l'invention, on peut également éluer la résine anionique à l'aide de l'ammoniaque, ce qui donne un sel d'ammonium qui, surtout dans le cas particulier des décapages chlorhydriques, peut être utilisé pour la préparation du flux dont il a été question plus haut. Toutefois la quantité de chlorure d'ammonium nécessitée pour le flux est, en général, inférieure à celle qui est produite par la régénération de la résine anionique. C'est pourquoi il convient par exemple d'alterner les régénérations sodiques et ammoniacales pour donner, d'une part, du chlorure d'ammonium en quantité juste nécessaire à la régénération du flux et, d'autre part, un sel de sodium qui est alors rejeté.

Toutefois, il est à prévoir qu'à terme les administrations nationales compétentes refuseront le rejet des sels de sodium. Dans ce cas, on peut adjoindre aux deux jeux de résines précédents un nouveau jeu de résine cationique. Dans une étape f), on fait passer l'éluat provenant de la régénération de la résine anionique sur cette nouvelle résine cationique, ce qui permet, d'une part, la régénération de l'acide minéral ayant servi au décapage et, d'autre part, l'obtention du cation de la base ayant servi à la régénération de la résine anionique. En choisissant judicieusement ce cation et l'acide qui, dans une étape f), sert à la régénération de ce nouveau jeu de résine, on peut produire comme effluents des sels valorisables tels que par exemple des nitrates de potassium et d'ammonium, des phosphates d'ammonium, des phosphates de potassium, des sulfates d'ammonium.

Selon une mise en œuvre préférée de l'invention, l'acide assurant la régénération de l'étape g) circule dans le sens opposé au sens de circulation de l'éluat obtenu dans l'étape e).

Il convient de noter ici combien ce procédé est souple et peut s'adapter aux différentes exigences de l'administration.

Selon l'invention, on peut traiter les effluents de décapage soit en les dirigeant vers une installation d'électrodialyse, soit en les soumettant à une pyrohydrolyse suivant une des techniques mises au point pour le chlorure ferreux. Il est préférable d'utiliser la technique décrite dans l'article paru dans « Wire Industry » de Janvier 1978 intitulé « A process for regeneration of spent hydrochloric pickle acid » par M. Wurmbauer, et dans la brochure éditée et publiée par Ruthner Industrieanlagen Aktiengesellschaft intitulée « New applications of the spray roasting process in the chloride hydrometallurgy ». En effet cette technique présente une tolérance élevée aux impuretés telles que le chlorure de zinc dans les solutions de chlorure de fer ainsi que la présence d'ions ferriques en quantité relativement importante.

Les exemples, non limitatifs, suivants permettent à l'homme de métier de mieux se rendre compte du problème posé et de déterminer quelles sont les conditions opératoires les mieux adaptées à chaque cas particulier.

## Exemple 1

### Installation pour le Traitement Intégré des Effluents liquides de Décapage

A) Tableau récapitulatif des effluents à traiter d'une unité type de décapage chlorhydrique d'acier pour galvanisation à chaud

| Bain | Composition | Volume | Rejet |
|---|---|---|---|
| Dégraissage | Bains alcalins | 22 m³ | 1 fois par an |
| Rinçage | Eau courante | 22 m³ | 3 m³/h |
| Décapage | HCl 2 à 20 % Fe de 0 à 110 g/l | 4 cuves 22 m³ | 1 bain dure 4 mois, soit rejet 1 bain/mois 242 m³/an |
| Rinçage statique « ou mort » | Fe < 30 g/l | 22 m³ | purge |
| Rinçage | Eau courante | 22 m³ | 3 m³/h |
| Fluxage | $ZnCl^2 + NH^4Cl$ | 22 m³ | 1 fois par an |
| Boues de dégraissage | | | 6 m³/an |
| Boues de fluxage | | | 6 m³/an |

B) Analyses types des rejets :

— Bain de décapage usé

$40 < Fe < 150$ g/l   Valeur retenue : 110 g/l
$180 < Cl < 210$ g/l   Valeur retenue : 200 g/l
$Ca < 300$ mg/l
$Cu < 100$ mg/l
$Mn < 700$ mg/l
$Zn < 20$ g/l

— Fluxage : 22 m³/an

Fe  20 g/l
Zn  120 g/l

— Eaux de rinçage : 3 m³/heure

pH  4 à 6
$Fe < 250$ mg/l
$Cl < 350$ mg/l
$Ca < 100$ mg/l
$Zn < 20$ mg/l

C) Traitement en centrale des rejets chlorhydriques concentrés suivant la technique de pyrohydrolyse décrite ci-avant.

Les 242 m³ de bain de décapage usé à 200 grammes par litre de chlorure et à 110 grammes par litre de fer sont transformés en :
— 249 tonnes/an de HCl à 20 % récupérés ;
—  38 tonnes/an de $Fe_2O_3$ dont l'analyse type est :
(%) $Fe_2O_3$ 99,2  Si 0,03  Mn 0,2  Mg 0,003  Ca 0,03  Na 0,01

D) Traitement des eaux de rinçage sur échangeur d'ions par le procédé T.I.E.D., objet de la présente invention (voir schéma)

Le rinçage mort est remplacé par le pré-rinçage acide décrit plus haut et on maintient sa concentration en acide chlorhydrique à une valeur comprise entre environ 18 et 20 % en poids en prélevant dans le stockage d'acide régénéré ou par dilution d'acide frais d'appoint à 33 % HCl.

Une purge continue à petit débit ou discontinue du pré-rinçage est réalisée dans le stockage correspondant.

En désignant par :

Xm : la concentration moyenne en fer (g/l) des différents bains de décapage (moyenne pondérée par les taux d'utilisation de différents bains en surface ou en tonnages)

C : la concentration en fer (g/l) du pré-rinçage acide à un instant t

E : l'entraînement (l/h) par les pièces d'un bain à un autre

v : le débit de purge du pré-rinçage acide

Les expérimentations montrent que la concentration est indépendante du temps et est uniquement fonction de la concentration moyenne Xm en fer des bains de décapage.

L'expérience des ateliers industriels indique une valeur de Xm sensiblement égale à 60 grammes par litre de fer, d'où C voisin de 25 ($\pm$ 5) grammes de fer par litre.

Dans de telles conditions, le débit de purge du pré-rinçage acide est fonction de l'entraînement E causé par les pièces et, dans l'exemple choisi, il est de :

$$v = 1,29 \ E \quad (\text{v et E en l/h})$$

La dimension du poste d'échangeurs d'ions est choisie en fonction des critères d'exploitation souhaités ; la fréquence de régénération détermine le volume de résines à mettre en œuvre et le stockage (b) pour le rôle de tampon pour l'utilisation de la purge comme réactif de régénération.

Dans l'exemple de l'atelier mentionné ci-dessus, les valeurs suivantes sont à retenir :
— concentration moyenne Xm des bains = 60 g/l Fe
— entraînement E par les pièces = 120 l/jour

5

— purge du pré-rinçage v acide = 155 l/jour
— concentration d'équilibre du pré-rinçage acide = 26 g/l Fe

En choisissant une fréquence de régénération journalière de la résine cationique, on obtient les valeurs suivantes :

flux entrant dans le pré-rinçage : 120 × 60 = 7 200 g Fe/j (jour)
flux entraîné vers le rinçage courant recyclé : 120 × 26 = 3 120 g Fe/j sous forme de 24 m³/j à 130 mg/l Fe

flux entraîné par la purge du pré-rinçage acide : 155 × 26 = 4 030 g Fe/j
volume de résine à mettre en œuvre : 3 120/30 = 104 l
volume de réactif de régénération :  155 l
concentration de l'éluat cationique :  46 g/l Fe
200 g/l HCl

Cet éluat est recyclé après stockage en (c) comme acide de décapage.
La production annuelle d'éluat est de :

$$240 \text{ jours} \times 155 \text{ l/j} = 37\,200 \text{ l/an à } 46 \text{ g/l Fe}$$

soit 1,711 t Fe/an, ce qui correspond bien à l'entraînement total de fer à la sortie du décapage qui est de :

$$120 \text{ l/j} \times 240 \times 60 \text{ g/l Fe} = 1,728 \text{ t Fe/an}$$

Il convient de noter que cette quantité annuelle d'éluat cationique de 37,2 m³/an est inférieure à deux rejets de bains usés par an (44 m³), donc tout à fait compatible avec son emploi en décapage.

Bilan anionique :

La concentration en ions chlorure du rinçage statique s'élève en moyenne à 210 g/l Cl⁻, soit un entraînement d'environ :

$$(E \times 210)/35,5 = 6 \text{ E équivalents Cl}^-/\text{jour}$$

(avec E entraînement en litres par jour par les pièces).

Dans l'exemple de l'atelier mentionné (E = 120 l/j) et pour une résine dont la capacité est de 0,8 équivalent anionique par litre, le volume de résine anionique à mettre en œuvre est, pour une régénération quotidienne :

$$6 \text{ E}/0,8 = 900 \text{ l résine anionique faible}$$

(résine type Bayer Lewatit MP 64 WS sous forme OH).

Une régénération quotidienne de cet échangeur par 1 000 l de lessive de soude à 8 % conduit à 3 570 l d'éluat anionique titrant en moyenne 12 g/l NaCl. Cet éluat peut être rejeté à petit débit continu au rythme de 150 l/h.

La saturation des échangeurs d'ions est suivie par la mesure de la résistivité de l'eau recyclée à la sortie de l'ensemble de déminéralisation. Cette résistivité doit être au moins de 10 000 ohms-centimètres.

Exemple 2

Application de l'invention au décapage des pièces métalliques contenant du cuivre

Dans une chaîne de décapage de fil de cuivre, on maintient constante la composition du bain de décapage à $H_2SO_4$ = 240 g/l (4,8 N) et Cu = 40 g/l.

A la suite du décapage prcprement dit, il y a le pré-rinçage acide qui s'équilibre à $H_2SO_4$ = 300 g/l (6N) et Cu = 15 g/l.

Les effluents du rinçage courant qui suit ce pré-rinçage acide sont traités sur un lit de résine cationique, puis sur un lit de résine anionique. La régénération de la résine cationique est effectuée par la solution contenue dans le pré-rinçage acide et l'on obtient un éluat contenant $H_2SO_4$ = 270 g/l et 33 g/l de cuivre qui est joint au bain de décapage.

Le bain de décapage quant à lui est traité de façon continue, par exemple par électrolyse, pour en extraire le cuivre sous forme métallique tout en régénérant l'acide sulfurique.

L'eau du rinçage courant après traitement sur résine cationique, puis anionique, est recyclée dans le bac de rinçage courant.

**Revendications**

1. Procédé de traitement des eaux provenant du rinçage de pièces métalliques ferreuses, ayant subi un décapage au moyen d'un acide fort, comportant les étapes suivantes :

a) on met en contact ladite eau de rinçage avec une résine cationique ;

b) on élue la résine chargée au moyen d'une solution au moins quatre fois normale de l'acide fort utilisé pour le décapage ;

caractérisé par le fait que ledit acide concentré, utilisé lors de l'étape b) est une solution de décapage usée et contient de 40 à 150 grammes par litre de fer ; le rapport entre la concentration en ions métalliques et celle en acide fort, exprimé en équivalents-grammes, étant au plus d'un tiers.

2. Procédé selon la revendication 1, caractérisé par le fait que la résine cationique a comme groupement actif des groupements sulfoniques.

3. Procédé selon la revendication 1, caractérisé par le fait que le rapport entre la concentration en ions métalliques et celle en acide fort, exprimée en équivalents-grammes, est au plus de un cinquième.

4. Procédé selon les revendications 1 et 2 prises séparément, caractérisé par le fait qu'outre le fer les ions métalliques sont les ions correspondant aux métaux constitutifs desdites pièces métalliques.

5. Procédé selon les revendications 1 à 4 prises séparément, caractérisé par le fait que l'éluat issu de l'étape b) est recyclé vers l'opération de décapage.

6. Procédé selon les revendications 1 à 5 prises séparément, caractérisé par le fait que l'opération de décapage comporte une étape de pré-rinçage réalisée au moyen des acides forts et par le fait que ladite solution de décapage usée est une solution d'acide ayant été utilisé pour le pré-rinçage.

7. Procédé selon les revendications 1 à 6 prises séparément, caractérisé par le fait que l'acide fort est choisi dans le groupe constitué par l'acide sulfurique et l'acide chlorhydrique.

8. Procédé selon les revendications 1 à 7 prises séparément, caractérisé par le fait que les métaux constitutifs de la pièce métallique sont choisis dans le groupe constitué par le fer, le cuivre, le nickel, le chrome, le cobalt, le zinc et leurs alliages.

9. Procédé selon les revendications 1 à 8 prises séparément, caractérisé par le fait qu'il comporte les étapes suivantes :

c) on fait passer les eaux de rinçage issues de l'étape a) sur une résine échangeuse d'anions ;

d) on recycle l'eau ainsi permutée vers les installations de rinçage.

10. Procédé selon la revendication 9, caractérisé par le fait qu'il comporte en outre l'étape suivante :

e) on élue la résine anionique à l'aide d'une base soluble forte.

11. Procédé selon la revendication 10, caractérisé par le fait que ladite base soluble forte est l'ammoniaque.

12. Procédé selon la revendication 10, caractérisé par le fait que ladite base soluble forte est un hydroxyde alcalin.

13. Procédé selon l'une des revendications 10 à 12 prises séparément, caractérisé par le fait qu'il comprend en outre l'étape suivante :

f) on fait passer l'éluat obtenu dans l'étape e) sur une résine cationique pour régénérer l'acide minéral fort employé pour le décapage.

14. Procédé selon la revendication 13, caractérisé par le fait qu'il comporte en outre l'étape suivante :

g) on régénère la résine cationique de l'étape f) au moyen d'un acide choisi dans le groupe constitué par les acides sulfurique, nitrique et phosphorique.

15. Procédé selon la revendication 14, caractérisé par le fait que l'acide assurant la régénération de l'étape g) circule dans le sens opposé au sens de circulation de l'éluat obtenu dans l'étape e).

16. Procédé selon les revendications 10 à 15 prises séparément, caractérisé par le fait que la base forte assurant la régénération de l'étape e) circule dans le sens opposé au sens de circulation des eaux de rinçage.

17. Procédé selon les revendications 1 à 16 prises séparément, caractérisé par le fait que lors de l'étape b) d'élution de la résine anionique, l'acide minéral fort se déplace dans le sens opposé au sens de déplacement des eaux de rinçage pendant l'étape a).

## Claims

1. Treatment process for water that has been used for rinsing ferrous metal parts which have undergone pickling with strong acid, comprising the following stages :

a) the said rinsing water is put in contact with a cationic resin ;

b) the charged resin is eluted with a minimum 4N solution of the strong acid used for pickling ; characterised by the fact that the said concentrated acid, used in stage (b) is a used pickling solution and contains 40 to 150 grams of iron per litre, the ratio between the metallic ion concentration and the strong acid concentration, expressed in gram-equivalents, being one-third at the most.

2. Process according to claim 1 characterised by the fact that the cationic resin has sulphonic groups as its active groups.

3. Process according to claim 1 characterised by the fact that the ratio between the metallic ion concentration and the strong acid concentration, expressed in gram-equivalents, is one-fifth at the most.

4. Process according to claims 1 and 2 taken separately characterised by the fact that in addition to iron, the metallic ions are the ions corresponding to the constituent metals in the said metal parts.

5. Process according to claims 1 to 4 taken separately characterised by the fact that the eluate coming from stage (b) is recirculated to the pickling operation.

6. Process according to claims 1 to 5 taken separately characterised by the fact that the pickling operation comprises a pre-rinsing stage carried out by means of strong acids and by the fact that the said used pickling solution is an acid solution that has been used for pre-rinsing.

7. Process according to claims 1 to 6 taken separately characterised by the fact that the strong acid is selected from the group consisting of sulphuric acid and hydrochloric acid.

8. Process according to claims 1 to 7 taken separately characterised by the fact that the constituent metals in the metal part are selected from the group consisting of iron, copper, nickel, chromium, cobalt, zinc and their alloys.

9. Process according to claims 1 to 8 taken separately characterised by the fact that it comprises the following stages :

c) the rinsing water coming from stage (a) is passed over an anion-exchange resin ;

d) the water thus exchanged is recirculated to the rinsing installations.

10. Process according to claim 9 characterised by the fact that it furthermore comprises the following stage :

e) the anionic resin is eluted with a strong soluble base.

11. Process according to claim 10 characterised by the fact that the said strong soluble base is ammonia.

12. Process according to claim 10 characterised by the fact that the said strong soluble base is an alkaline hydroxide.

13. Process according to any one of claims 10 to 12 taken separately characterised by the fact that it furthermore comprises the following stage :

f) the eluate obtained in stage (e) is passed over a cationic resin in order to regenerate the strong mineral acid used for pickling.

14. Process according to claim 13 characterised by the fact that it furthermore comprises the following stage :

g) the cationic resin from stage (f) is regenerated by means of an acid selected from the group consisting of sulphuric, nitric and phosphoric acids.

15. Process according to claim 14 characterised by the fact that the acid regenerating stage (g) circulates in the opposite direction to the direction of circulation of the eluate obtained in stage (c).

16. Process according to claims 10 to 15 taken separately characterised by the fact that the strong base regenerating stage (e) circulates in the opposite direction to the direction of circulation of the rinsing water.

17. Process according to claims 1 to 16 taken separately characterised by the fact that during the stage (b) elution of the anionic resin, the strong mineral acid moves in the opposite direction to the direction of movement of the rinsing water suring stage (a).

**Ansprüche**

1. Verfahren zur Behandlung von Abwässern aus der Spülung eisen-metallischer Teile, die mit einer starken Säure abgebeizt worden waren, welches folgende Stufen umfaßt :

a) man bringt das genannte Spülwasser mit einem kationischen Harz in Kontakt ;

b) man eluiert das beladene Harz mit Hilfe einer mindestens 4-normalen Lösung der für die Beizung verwendeten starken Säure ;

dadurch gekennzeichnet, daß die genannte konzentrierte in Stufe b) verwendete Säure eine gebrauchte Beizlösung ist und 40 bis 150 g Eisen pro Liter enthält ; wobei das Verhältnis zwischen der Konzentration an Metallionen und jener der starken Säure, ausgedrückt in Gramm-Äquivalenten, höchstens ein Drittel ist.

2. Verfahren nach Anspruch 1, dadurch gekennzeichnet, daß das kationische Harz als aktive Gruppierung Sulfonsäuregruppierungen enthält.

3. Verfahren nach Anspruch 1, dadurch gekennzeichnet, daß das Verhältnis zwischen der Konzentration an Metallionen und jener der starken Säure, ausgedrückt in Gramm-Äquivalenten, höchstens ein Fünftel beträgt.

4. Verfahren nach jeweils einem der Ansprüche 1 und 2, dadurch gekennzeichnet, daß die Metallionen außer dem Eisen die den metallischen Bestandteilen der genannten Metallteile entsprechenden Ionen sind.

5. Verfahren nach jeweils einem der Ansprüche 1 bis 4, dadurch gekennzeichnet, daß das aus der Stufe b) stammende Eluat in den Beizvorgang zurückgeführt wird.

6. Verfahren nach jeweils einem der Ansprüche 1 bis 5, dadurch gekennzeichnet, daß der Beizvorgang eine Stufe der Vorspülens mit Hilfe von starken Säuren umfaßt und daß die genannte gebrauchte Beizlösung ein Lösung der Säure ist, die für die Vorspülung verwendet wurde.

7. Verfahren nach jeweils einem der Ansprüche 1 bis 6, dadurch gekennzeichnet, daß die starke Säure aus der Gruppe bestehend aus Schwefelsäure und Chlorwasserstoffsäure ausgewählt ist.

8. Verfahren nach jeweils einem der Ansprüche 1 bis 7, dadurch gekennzeichnet, daß die den Metallteil zusammensetzenden Metalle aus der Gruppe bestehend aus Eisen, Kupfer, Nickel, Chrom, Cobalt, Zink und deren Legierungen ausgewählt sind.

9. Verfahren nach jeweils einem der Ansprüche 1 bis 8, dadurch gekennzeichnet, daß es folgende Stufen umfaßt :

c) man läßt die aus Stufe a) stammenden Spülwasser über ein Anionenaustauscherharz fließen ;

d) man führt das so permutierte Abwasser in die Spülanlagen zurück.

10. Verfahren nach Anspruch 9, dadurch gekennzeichnet, daß es außerdem die folgende Stufe umfaßt :

e) man eluiert das anionische Harz mit Hilfe einer starken löslichen Base.

11. Verfahren nach Anspruch 10, dadurch gekennzeichnet, daß die genannte starke lösliche Base Ammoniak ist.

12. Verfahren nach Anspruch 10, dadurch gekennzeichnet, daß die genannte starke lösliche Base ein Alkalihydroxid ist.

13. Verfahren nach jeweils einem der Ansprüche 10 bis 12, dadurch gekennzeichnet, daß es außerdem folgende Stufe umfaßt :

f) man läßt das in Stufe e) erhaltene Eluat über ein kationisches Harz fließen, um die für die Beizung verwendete starke Mineralsäure zu regenerieren.

14. Verfahren nach Anspruch 13, dadurch gekennzeichnet, daß es außerdem folgende Stufe umfaßt :

g) man regeneriert das kationische Harz der Stufe f) mit Hilfe einer Säure, die aus der Gruppe bestehend aus Schwefelsäure, Salpetersäure und Phosphorsäure ausgewählt ist.

15. Verfahren nach Anspruch 14, dadurch gekennzeichnet, daß die die Regenerierung der Stufe g) gewährleistende Säure in entgegengesetzter Richtung zu dem aus der Stufe c) erhaltenen Eluat zirkuliert.

16. Verfahren nach jeweils einem der Ansprüche 10 bis 15, dadurch gekennzeichnet, daß die starke, die Regenerierung der Stufe e) gewährleistende Base in entgegengesetzter Richtung zu den Spülwässern zirkuliert.

17. Verfahren nach jeweils einem der Ansprüche 1 bis 16, dadurch gekennzeichnet, daß die starke Mineralsäure bei der Stufe b) der Elution des anionischen Harzes in entgegengesetzter Richtung zum Ablauf der Spülwasser während der Stufe a) abläuft.